# EUROPÄISCHE PATENTSCHRIFT

(11) **EP 2 144 792 B1**
(45) Veröffentlichungstag und Bekanntmachung des Hinweises auf die Patenterteilung: **20.06.2012**
(21) Anmeldenummer: 08736473.3
(22) Anmeldetag: 23.04.2008
(51) Int. Cl.: B60R 25/04

(54) **VORRICHTUNG ZUR AUFNAHME EINES ELEKTRONISCHEN SCHLÜSSELS**
APPARATUS FOR RECEIVING AN ELECTRONIC KEY
DISPOSITIF DE RECEPTION D'UNE CLE ELECTRONIQUE

(30) Priorität: 09.05.2007 DE 102007022248
(43) Veröffentlichungstag der Anmeldung: 20.01.2010
(73) Patentinhaber: Huf Hülsbeck & Fürst GmbH & Co. KG, 42551 Velbert (DE)
(72) Erfinder: THRONBERENS, Stefan, 86559 Adelzhausen (DE)
(74) Vertreter: Vogel, Andreas
(86) Internationale Anmeldenummer: PCT/EP2008/054885
(87) Internationale Veröffentlichungsnummer: WO 2008/138715

(56) Entgegenhaltungen:
- DE-A1- 10 353 195
- JP-A- 2004 058 731
- US-A1- 2004 129 042

## Beschreibung

Die Erfindung betrifft eine Vorrichtung zur Aufnahme eines elektronischen Schlüssels, der mit einem Zündschlosssystem eines Kraftfahrzeuges zur Fahrberechtigungskontrolle zusammenwirkt, mit einer in einem Trägerelement befindlichen Aufnahme, in die der elektronische Schlüssel einführbar ist, wobei das Trägerelement mittels des Schlüssels zwischen einer Ausgangsstellung und mindestens einer Betriebsstellung bewegbar ist.

In der DE 103 53 195 A1 ist ein Zündschlosssystem eines Kraftfahrzeuges mit einem elektronischen Zündschloss, sowie mit einem elektronischen Schlüssel offenbart, wobei das Zündschloss eine in einem Trägerelement befindliche Aufnahme für den Schlüssel aufweist. Das Trägerelement ist linear beweglich zwischen einer Ausgangsstellung und mehrere Bewegungsstellungen verschiebbar. Die Bewegungsstellungen für das Trägerelement sind jeweils als Raststellungen ausgebildet. Die Raststellungen sind durch das Zusammenwirken eines Schaltherzens ausgestalteten Rastkurve mit einem in die Rastkurve eingreifenden Raststift festgelegt.

Eine Druckfeder, die innerhalb des Gehäuses vorgesehen ist, dient zur Erzeugung einer in Richtung der Ausgangsstellung wirkenden Rückstellkraft für das Trägerelement bei dessen Bewegung. Es hat sich nachteiligerweise gezeigt, dass der Aufbau dieser Vorrichtung konstruktiv aufwendig ist.

Es ist Aufgabe der vorliegenden Erfindung, eine Vorrichtung zur Aufnahme eines elektronischen Schlüssels zu schaffen, bei der die genannten Nachteile vermieden werden, insbesondere eine Vorrichtung bereitgestellt wird, die einfach gestaltet ist und eine gute Funktionalität aufweist.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass in der Ausgangsstellung das Trägerelement über eine Sicherungseinheit von einer Sicherungsposition in eine Entsicherungsposition bringbar ist, in der Sicherungsposition das Trägerelement in der Ausgangsstellung gehalten ist, in der Entsicherungsposition eine Bewegung des Trägerelementes in die Betriebsstellung freigegeben ist und das Gehäuse eine Kulissenführung aufweist, die mit Rastelementen der Sicherungseinheit zusammenwirkt, wobei während der Bewegung des Trägerelementes von der Ausgangsstellung in die Betriebsstellung die Sicherungseinheit mit der Kulissenführung eine Widerstandskraft auf das Trägerelement ausübt. Die Kulissenführung ist vorteilhafterweise als eine Auswölbung ausgestaltet, die in das Innere der Vorrichtung hineinragt. Während der Schlüssel in die Aufnahme gebracht wird und das Trägerelement aus seiner Ausgangsstellung in Richtung der Betriebsstellung bewegt wird, spürt der Benutzer eine Widerstandkraft, die von der Sicherungseinheit und der Kulissenführung ausgeht. In einer definierten Stellung zwischen der Ausgangsstellung und der Betriebsstellung wirkt eine maximale Widerstandskraft. In einer bevorzugten Ausführungsform der Erfindung wird ab dieser genannten definierten Stellung das Trägerelement automatisch in die Betriebsstellung bewegt, ohne das der Benutzer Kraft auf den Schlüssel anwenden muss. Während der Bewegung des Trägerelementes gleiten die Rastelemente stets an der Kulissenführung ab. Die Kulissenführung kann schräge Flächen aufweisen, die während der Bewegung des Trägerelementes durch die Rastelemente kontaktiert werden.

In der Sicherungsposition liegt das Rastelement in einer bevorzugten Ausführungsform der Erfindung an einem Anschlag des Gehäuses an. Der Anschlag bewirkt, dass das Rastelement und somit das Trägerelement nicht ohne weiteres in die Betriebsstellung bewegt werden kann. Erst mit der Einführung des berechtigten elektronischen Schlüssels in die Aufnahme werden die Rastelemente vom Anschlag wegbewegt, so dass die Entsicherungsposition des Trägerelementes freigegeben ist und eine Bewegung des Trägerelementes in die Betriebsstellung bewirkbar ist.

Zweckmäßigerweise schließt sich die Kulissenführung dem Anschlag in Richtung der Betriebsstellung des Trägerelementes an und ragt in das Innere der Vorrichtung hinein. Hierbei kann die Kulissenführung einen Druckpunkt aufweist, bei dem die Rastelemente maximal in das Innere der Vorrichtung eingefahren sind. Bis zum Druckpunkt erhöht sich die auf den Benutzer wirkende Widerstandskraft während des Einschiebens des Schlüssels in die Aufnahme und der Bewegung des Trägerelementes in Richtung der Betriebsstellung. Im Druckpunkt ist die maximale Widerstandskraft erreicht. Ab dieser Stellung des Trägerelementes wird die Betriebsstellung ohne Krafteinwirkung des Benutzers erreicht.

Vorteilhafterweise ist die Sicherungseinheit innerhalb der Aufnahme mit Aktivierungsflächen ausgeführt, die der Kontur des Schlüssels derart angepasst sind, dass lediglich über eine Kontaktierung der Aktivierungsflächen durch den Schlüssel eine Entsicherungsposition des Trägerelementes erzielbar ist. Besonders vorteilhaft ist, dass die Aufnahme derart an den elektronischen Schlüssel angepasst ist, dass nur der für die Vorrichtung vorgesehene Schlüssel verwendet werden kann, um das Trägerelement aus der Ausgangsstellung in die Betriebsstellung zu bewegen. Ein elektronischer Schlüssel mit einer abweichenden Kontur kann eine Freigabesituation des Trägerelementes nicht bewirken. Die Sicherungseinheit bewirkt ferner, dass ein ungewolltes Verschieben des Trägerelementes in die Betriebsstellung durch die Einführung eines Gegenstandes oder einer oder mehrerer Finger nicht ausgelöst werden kann, da das Trägerelement in der Ausgangsstellung sich in einer unverschiebbaren Sicherungsposition befindet. Somit weist die erfindungsgemäße Vorrichtung einen Fingerschutz auf. Nachdem der für die erfindungsgemäße Vorrichtung vorgesehene elektronische Schlüssel sich in der Aufnahme befindet, erkennt die Sicherungseinheit über ihre Aktivierungsflächen den Schlüssel, wodurch das Trägerelement von der Sicherungsposition in die Entsicherungsposition gebracht wird. Über den Schlüssel, auf den der Benutzer eine gewisse Druckkraft ausübt, wird das Trägerelement, das als eine Art Schlitten ausgeführt ist, anschließend in die Betriebsstellung bewegt. Bei der vorliegenden Erfindung können selbstverständlich mehrere Betriebsstellungen vorgesehen sein. Erfindungsgemäß kann vorgesehen sein, dass zwischen dem elektronischen Schlüssel und dem Kraftfahrzeug, insbesondere mit dem Zündschlosssystem ein elektronischer Code, und zwar bevorzugt in einer bidirektionalen Kommunikation, ausgetauscht oder übertragen wird. Nach einer positiven Auswertung des ausgetauschten elektronischen Codes, d. h. es handelt sich um den berechtigten Schlüssel, wird wenigstens eine bewirkbare Funktion freigegeben und/oder ausgelöst. Bei dieser freigegebenen und/oder ausgelösten Funktion kann es sich um das Einschalten von Verbrauchern im Kraftfahrzeug, wie um das Radio, die Beleuchtung usw. handeln. Ebenfalls ist es denkbar, dass ein Starten des Kraftfahrzeuges hierdurch bewirkt werden kann. In einer weiteren Alternative kann auch ein separater Start-/Stopp-Schalter zum Starten des Kraftfahrzeuges vorgesehen sein. Erst wenn der berechtigte Schlüssel sich in der Betriebsstellung der erfindungsgemäßen Vorrichtung befindet, ist ein Starten des Kraftfahrzeuges über diesen Start-/Stopp-Schalter möglich.

In einer besonderen Ausführungsform der Erfindung sind die Aktivierungsflächen linear bewegbar gelagert. Wird der elektronische Schlüssel in die Aufnahme durch den Benutzer geschoben, kontaktiert der Schlüssel mit seinem Gehäuse die Aktivierungsflächen. Bei der Bewegung des Schlüssels, indem der Benutzer auf den Schlüssel drückend einwirkt, wird eine Kraft vom Gehäuse des Schlüssels auf die Aktivierungsflächen ausgeübt, die sich anschließend linear bewegen und das Trägerelement von der Sicherungsposition in die Entsicherungsposition bringen.

Vorteilhafterweise sind mindestens zwei Aktivierungsflächen vorgesehen, die beabstandet voneinander angeordnet sind, wobei eine Entsicherungsposition nur durch eine Bewegung beider Aktivierungsflächen erreichbar ist. Somit reicht es in dieser Ausführungsform nicht aus, lediglich eine Aktivierungsfläche über den Schlüssel zu bewegen, um eine Entsicherungsposition des Trägerelementes zu erreichen. Aus Sicherheitsgründen müssen beide Aktivierungsflächen durch den Schlüssel bewegt werden. Hierbei befinden sich die Aktivierungsflächen weit voneinander beabstandet innerhalb der Vorrichtung, damit ausgeschlossen ist, dass durch eine unsachgemäße Einführung eines Gegenstandes gleichzeitig beide Aktivierungsflächen unbewusst kontaktiert werden.

In einer Ausführungsform der Erfindung erstrecken sich die Aktivierungsflächen zu der Seite der Vorrichtung, an der der elektronische Schlüssel einführbar ist. Hierdurch wird ein möglichst frühzeitiger Kontakt der Sicherungseinheit mit dem einzuführenden elektronischen Schlüssel erzielt. Ferner ist das Trägerelement senkrecht zur Verschieberichtung der Aktivierungsflächen bewegbar gelagert. Durch eine derartige Maßnahme ist ein kompakter Aufbau der erfindungsgemäßen Vorrichtung erzielbar. In der Sicherungsposition weisen die Aktivierungsflächen einen geringeren Abstand zueinander auf als in der Entsicherungsposition des Trägerelementes.

Eine besondere Ausführungsform der Vorrichtung sieht vor, dass die Sicherungseinheit ein Oberteil und ein Unterteil aufweist, wobei das Oberteil und das Unterteil jeweils mit einem Rastelement und einer Aktivierungsfläche ausgeführt sind. Wird der elektronische Schlüssel in die Aufnahme geführt, erfolgt eine Bewegung der Aktivierungsflächen, wobei gleichzeitig sich das Oberteil und das Unterteil mitbewegen. Das Oberteil und das Unterteil sind vorzugsweise verschiebbar zueinander gekoppelt. Um einen kompakten Aufbau zu erzielen, liegt das Oberteil oberhalb des Unterteils, wobei beide Teile zueinander verschiebbar sind. Während der elektronische Schlüssel in die Betriebsstellung bewegt wird, verschiebt sich das Trägerelement translatorisch gemeinsam mit dem Oberteil und dem Unterteil bis die Rastelemente des Oberteils und des Unterteils in eine weitere Raststellung der Betriebsstellung des Trägerelementes gelangen. Damit das Oberteil und das Unterteil zuverlässig zueinander bewegt werden können, kann das Oberteil mindestens ein Führungsmittel aufweisen, das mit einem Gegenführungsmittel des Unterteils zusammenwirkt. Das Führungsmittel dient dazu, dass die gewünschte Bewegungsrichtung des Oberteils und des Unterteils stets beibehalten wird, ohne dass sich das bewegende Oberteil oder Unterteil verkantet, wodurch eine Funktionsstörung während der Bewegung des Trägerelementes entstehen kann. Während sich das Trägerelement in die Betriebsstellung bewegt, verfahren die Rastelemente des Oberteils und des Unterteils entlang der Kulissenführung, wobei die Aktivierungsflächen nach außen in Richtung des zugewandten Gehäuses durch den elektronischen Schlüssel gedrückt werden. Die Kulissenführung kann vorteilhafterweise bis zu einem gewissen Druckpunkt "rampenförmig" ausgeführt sein und ragt in das Innere der Vorrichtung hinein. Die Kulissenführung kann zwischen der Ausgangsstellung und der Betriebsstellung anstelle des Druckpunktes auch einen Bereich aufweisen, wodurch ein maximaler Ausschlag der Rastelemente in das Innere der Vorrichtung bewirkt wird. Durch diese Ausgestaltung des Gehäuses sowie seiner Gehäusewand wird kurz vor der Betriebsstellung des Trägerelementes ein gewisser Druckpunkt für den Benutzer erzeugt, bei dessen Überwindung und weiterer Bewegung das Trägerelement automatisch in die Betriebsposition verfährt. Ab dem Druckpunkt bis zur Betriebsposition erweitert sich die Kulissenführung wieder, wodurch die Rastelemente sich in Richtung ihrer Ausgangslage gemäß der Ausgangsstellung des Trägerelementes nach Außen bewegen.

Damit sich die Sicherungseinheit von dem genannten Druckpunkt zur Betriebsstellung des Trägerelementes automatisch bewegt, kann das Oberteil und das Unterteil federbelastet ausgeführt sein. Hierbei kann ein Federelement zwischen dem Oberteil und dem Unterteil angeordnet sein, wobei vom Federelement eine Kraft auf beide Teile ausgeübt wird. Die Kraft ist hierbei zum Gehäuse senkrecht zur Verschieberichtung des Trägerelementes ausgerichtet.

Zweckmäßigerweise ist eine Öffnung vorgesehen, durch die der Schlüssel in die Aufnahme einbringbar ist, wobei das Trägerelement Rastmittel aufweist, die in den Schlüssel eingreifen, wodurch der Schlüssel in der Aufnahme zuverlässig gehalten ist. Zur Erzielung einer guten Abdichtung gegen Staub, Schmutz oder dergleichen kann die Öffnung durch das Trägerelement in dessen Ausgangsstellung verschlossen sein. Alternativ kann auch eine vom Schlüssel bewegliche, federbelastete Klappe die Aufnahme im Bereich der Öffnung verschließen, wenn der Schlüssel nicht eingesteckt ist. Im Gehäuse ist vorteilhafterweise eine Führung für die Bewegung des Trägerelementes vorgesehen, so dass ein präziser Bewegungsablauf für den elektronischen Schlüssel gegeben ist. Vorteilhafterweise greifen die Rastmittel des Trägerelementes erst in der Betriebsstellung in den Schlüssel ein, so dass ein Entnehmen des Schlüssels aus der Aufnahme nicht ohne weiteres möglich ist.

In einer weiteren, die Erfindung verbessernden Maßnahme sind in der Ausgangsstellung des Trägerelementes die Rastmittel in Richtung der Gehäusewand elastisch verformbar. In der Betriebsstellung des Trägerelementes greifen die genannten Rastmittel in den Schlüssel ein. Hierbei weist der Schlüssel geeignete Einbuchtungen auf, in die die Rastmittel sich erstrecken können und den Schlüssel zuverlässig in der Betriebsstellung halten. Hierbei weist das Trägerelement vorsprungartige Auswölbungen auf, die der Gehäusewand zugewandt sind. In der Betriebsstellung liegen diese Auswölbungen unmittelbar am Gehäuse an, wobei gleichzeitig eine elastische Verformung des Trägerelementes sowie der Rastmittel in das Innere der Vorrichtung vorliegt und die Rastmittel in den Schlüssel eingreifen. Da die Auswölbungen des Trägerelementes unmittelbar am Gehäuse in der Betriebsstellung anliegen, kann eine elastische Verformung der Rastmittel in Richtung der Gehäusewand nicht entstehen, wodurch der Schlüssel zuverlässig in der Aufnahme über die Rastmittel gehalten ist. In der Ausgangsstellung besteht ein Abstand zwischen der Auswölbung und dem Gehäuse.

In einer weiteren Ausführungsform der Erfindung kann das Trägerelement an der der Öffnung abgewandten Seite Arretierungsmittel aufweisen, die in der Betriebsstellung des Trägerelementes in einen Bereich der Vorrichtung eingreifen, wodurch das Trägerelement arretierend gehalten ist. Vorzugsweise ist eine erste Kammer vorgesehen, in der das Trägerelement linear mit dem elektronischen Schlüssel bewegbar gelagert ist. Die Kammer weist hierbei an der der Öffnung abgewandten Seite mindestens eine Durchtrittsöffnung auf, durch die sich das Arretierungsmittel in der Betriebsstellung des Trägerelementes erstrecken kann. Um die Arretierungsmittel in der Betriebsstellung des Trägerelementes zuverlässig in ihrer Position zu halten, kann eine zweite Kammer vorgesehen sein, in der ein Blockierungssystem angeordnet ist. Hierbei arretiert das Blockierungssystem das Trägerelement in seiner Betriebsstellung, so dass eine Bewegung des Trägerelementes zurück in die Ausgangsstellung verhindert wird. Vorteilhafterweise ist das Blockierungssystem innerhalb der zweiten Kammer verschiebbar gelagert, wobei in der Betriebsstellung des Trägerelementes das Blockierungssystem zwischen den Arretierungsmitteln und den Durchtrittsöffnungen verfährt. Somit blockiert das Blockierungssystem das Arretierungsmittel, wodurch das Trägerelement sicher in der Betriebsstellung gehalten ist. Bei dem Blockierungssystem kann es sich beispielsweise um einen Hubmagneten handeln.

Vorzugsweise ist ein Sensorsystem vorgesehen, dass die Position des Trägerelementes detektiert und in Datenkombinationen mit weiteren elektronischen Bauteilen, insbesondere mit dem Blockierungssystem der zweiten Kammer steht. Bevorzugterweise ist das Sensorsystem mit einem Magneten und einem Hallsensor ausgeführt, wobei am Trägerelement der Magnet und der korrespondierende Hallsensor an einem unbeweglichen Teil des Gehäuses sich befinden. Alternativ zum Sensorsystem kann das Trägerelement ein in der Betriebsstellung zugeordnetes elektrisches, elektronisches oder optisches Schaltelement betätigen, wodurch eine Funktion des Kraftfahrzeuges freigegeben und/oder ausgelöst wird.

Das Oberteil, das Unterteil sowie die Aktivierungsflächen können eine C-förmige Einheit bilden, wobei sich die Aktivierungsflächen in Richtung der Öffnung, durch die der Schlüssel eingeschoben wird, bogenförmig erstrecken. Diese geometrische Form der Aktivierungsflächen begünstigt die Selbstpositionierung des Schlüssels innerhalb der Aufnahme und sorgt für eine optimale Umleitung der Kraft des Schlüssels in die Aktivierungsflächen.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: die erfindungsgemäße Vorrichtung zur Aufnahme eines elektronischen Schlüssels in perspektivischer Darstellung,
- Figur 2: eine Schnittansicht der Vorrichtung gemäß Figur 1 mit einem Trägerelement, das sich in einer Ausgangsstellung befindet, und
- Figur 3: die erfindungsgemäße Vorrichtung gemäß Figur 1 mit dem Trägerelement, das sich in einer Betriebsstellung befindet.

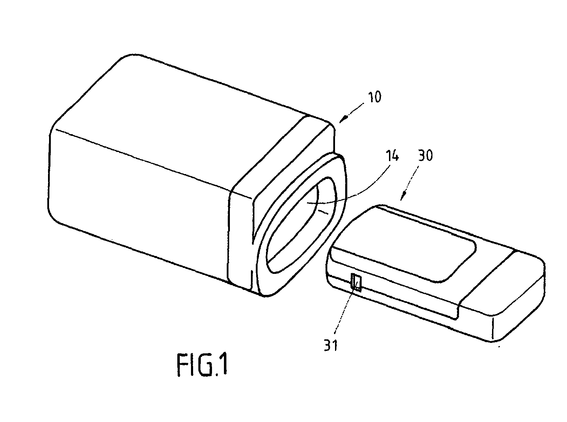

In der Figur 1 ist eine Vorrichtung 10 zur Aufnahme eines elektronischen Schlüssels 30 dargestellt. Hierbei wirkt der Schlüssel 30 mit einem nicht explizit dargestellten Zündschlosssystem eines Kraftfahrzeuges zur Fahrberechtigungskontrolle zusammen. Ist der Schlüssel 30 in der Vorrichtung 10 eingeführt, erfolgt eine Fahrberechtigungskontrolle, bei der zwischen dem Schlüssel 30 und einem elektrischen Bauteil des Kraftfahrzeuges, insbesondere dem Zündschlosssystem ein elektrischer Code, insbesondere in einer bidirektionalen Kommunikation ausgetauscht oder übertragen wird, welches beispielsweise in DE 10 2006 008 146.8 beschrieben ist.

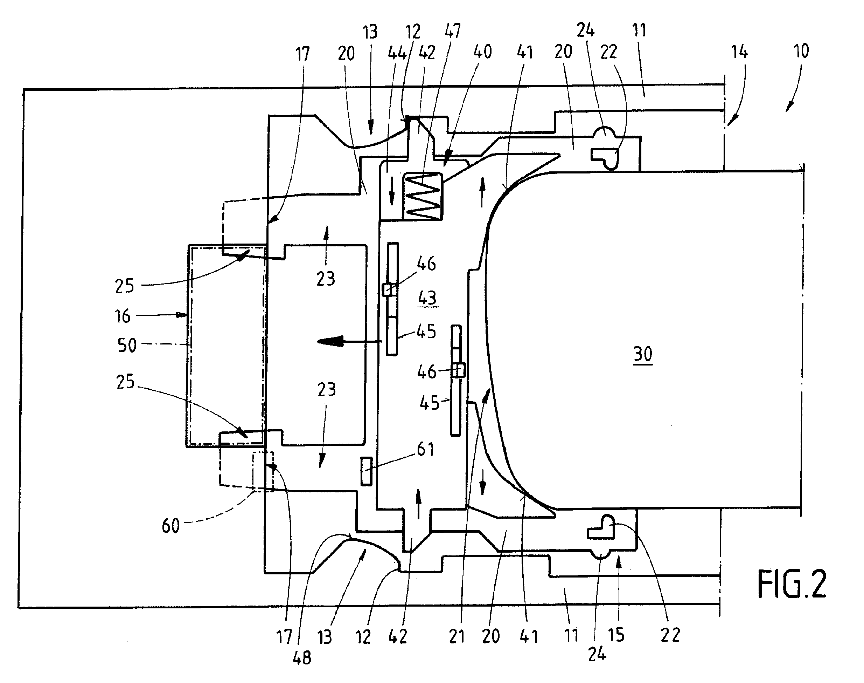

In Figur 2 befindet sich der elektronische Schlüssel 30 zumindest teilweise innerhalb der Vorrichtung, wobei der Schlüssel 30 in einer Aufnahme 21 eines Trägerelementes 20 eingeführt ist. Das Trägerelement 20 ist in Figur 2 in einer Ausgangsstellung. Des Weiteren verfügt das Trägerelement 20 über eine Sicherungseinheit 40, die das Trägerelement 20 in der Sicherungsposition hält. Die Sicherungseinheit 40 ist mit Aktivierungsflächen 41 ausgeführt, die der Kontur des Schlüssels 30 angepasst sind. Die Sicherungseinheit 40 verfügt über ein Oberteil 43 und ein Unterteil 44, die zueinander federbelastet bewegbar angeordnet sind. Zwischen dem Oberteil 43 und dem Unterteil 44 befindet sich eine Druckfeder 47, die eine Kraft auf beide Teile 43, 44 ausübt. Die Kraft ist hierbei zum Gehäuse 11 senkrecht zur Verschieberichtung des Trägerelementes 20 ausgerichtet. Das Oberteil 43 verfügt über ein Rastelement 42, das mit dem Gehäuse 11 zusammenwirkt. Das Unterteil 44 ist ebenfalls mit einem Rastelement 42 ausgeführt, welches gegenüberliegend zum Rastelement 42 des Oberteils 43 am Gehäuse 11 an einem Anschlag 12 anliegt. Das Oberteil 43 bzw. Unterteil 44 bildet mit dem Rastelement 42 und der Aktivierungsfläche 41 jeweils ein einstückiges Bauteil.

Das Oberteil 43 weist zwei Führungsmittel 45 in Form von schlitzförmigen Öffnungen auf, in der Gegenführungsmittel 46 des Unterteils 44 hineinragen. Die Gegenführungsmittel 46 sind im dargestellten Ausführungsbeispiel als Stifte ausgeführt, die durch die Öffnungen 45 hindurchragen. Die Öffnungen 45 sind versetzt zueinander angeordnet.

Wie in Figur 2 gut zu erkennen ist, ist das Gehäuse 11 mit einer Kulissenführung 13 ausgeführt, die sich dem Anschlag 12 in Richtung einer Betriebsstellung des Trägerelementes 20, die links von der Ausgangsstellung liegt, anschließt und in das Innere der Vorrichtung 10 hineinragt. Die Kulissenführung 13 ist als eine Art Auswölbung ausgeführt, die in das Innere der Vorrichtung 10 sich erstreckt.

Die Vorrichtung 10 ist mit einer Öffnung 14 versehen, durch die der elektronische Schlüssel 30 von außen in die Aufnahme 21 einbringbar ist. Das Trägerelement 20, das als eine Art Schlitten innerhalb der Vorrichtung 10 wirkt, weist Rastmittel 22 auf, die in Richtung des zugewandten Gehäuses 11 elastisch verformbar sind. Zwischen dem Gehäuse 11 und den Rastmitteln 22 ist das Trägerelement 20 mit einer vorsprungartigen Auswölbung 24 ausgeführt. In der Ausgangsstellung des Trägerelementes 20 gemäß Figur 2 besteht ein Abstand zwischen der Auswölbung 24 und dem Gehäuse 11. Die Rastmittel 22 greifen hierbei nicht in korrespondierende Öffnungen 31 des Schlüssels 30 ein, die explizit in Figur 1 dargestellt sind.

In Figur 2 ist die Besonderheit dargestellt, dass der Schlüssel 30 bereits die Aktivierungsfläche 41 des Oberteils 43 nach oben verschoben hat, so dass das Rastmittel 42 nicht mehr am Anschlag 12 sich befindet. Die Aktivierungsfläche 41 des Unterteils 44 ist noch nicht durch den Schlüssel 30 bewegt worden, so dass das Rastelement 42 des Unterteils 44 noch am Anschlag 12 anliegt.

Wird nun der elektronische Schlüssel 30 weiter in die Vorrichtung 10 hineingedrückt, drückt das Gehäuse des elektronischen Schlüssels 30 die Aktivierungsfläche 41 des Oberteils 43 nach oben und die Aktivierungsfläche 41 des Unterteils 44 nach unten, wobei gleichzeitig die Rastelemente 42 sich von dem Gehäuse 11 entfernen und nach innen verfahren. Gleichzeitig wird das Federelement 47 gespannt und wenn beide Rastelemente 42 sich vom Anschlag 12, der im Wesentlichen senkrecht zur Verschieberichtung der Aktivierungsflächen 41 ausgerichtet ist, gelöst haben, wird durch die Bewegung des Schlüssels 30 das Trägerelement 20 samt der Sicherungseinheit 40 nach links verschoben. Die Rastelemente 42 gelangen in Kontakt mit der Kulissenführung 13 des Gehäuses 11. Während sich das Trägerelement 20 weiter nach links in die Betriebsstellung verschiebt, drückt die Kulissenführung 13, die nach innen in die Vorrichtung 10 hineinragt, die Rastelemente 42 weiter in das Innere der Vorrichtung hinein. Gleichzeitig verschieben sich das Oberteil 43 und das Unterteil 44 zueinander, wobei die Stifte 46 sich innerhalb der beiden schlitzförmigen Öffnungen 45 des Oberteils 43 bewegen.

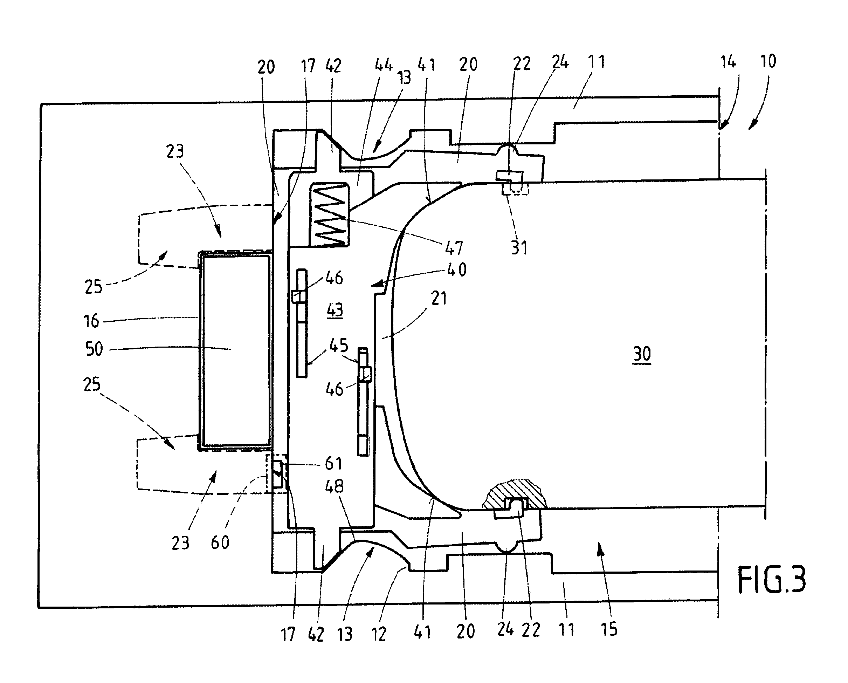

Die Kulissenführung 13 ist mit einem Druckpunkt 48 ausgeführt, bei dem die Rastelemente 42 maximal in das Innere der Vorrichtung 10 ausgerichtet sind. Übt der Benutzer weiter eine Kraft auf den Schlüssel 30 aus, während die Rastelemente 42 sich am Druckpunkt 48 befinden, verfährt die Sicherungseinheit 40 mit dem Trägerelement 20 automatisch in die Betriebsstellung, die in Figur 3 dargestellt ist. Das gespannte Federelement 47 stellt für die Bewegung vom Druckpunkt 48 bis in die Betriebsstellung die notwendige Energie zur Verfügung. In der Betriebsstellung liegen die Rastelemente 42 mit einer Seite unmittelbar an der schräg ausgeführten Kulissenführung 13 an. Die Kulissenführung 13 weist im Bereich der Betriebsstellung einen Winkel von ungefähr 45° auf, wobei der anliegende Bereich des Rastelementes 42 entsprechend der Kulissenführung 13 angepasst ist.

In der Betriebsstellung wird die Auswölbung 24 durch das Gehäuse 11 nach innen gedrückt, wobei gleichzeitig die Rastmittel 22 in die Öffnungen 31 des Schlüssels 30 einfahren und somit den Schlüssel 30 zuverlässig in der Betriebsstellung innerhalb der Aufnahme 21 halten. Da die Auswölbung 24 unmittelbar an dem Gehäuse 11 anliegt, ist eine elastische Verformung der Rastmittel 22 in Richtung des Gehäuses 11 ausgeschlossen.

Wie in Figur 1 und Figur 2 verdeutlicht ist, weist das Trägerelement 20 an der der Öffnung 14 abgewandten Seite Arretierungsmittel 23 auf. Die Sicherungseinheit 40 befindet sich zwischen den Arretierungsmitteln 23 und dem eingeführten Schlüssel 30, wodurch eine kompakte Bauform erzielt wird. Im dargestellten Ausführungsbeispiel sind zwei Arretierungsmittel 23 voneinander beabstandet angeordnet, deren Kopfbereiche 25 vergrößert ausgeführt sind. Die erfindungsgemäße Vorrichtung 10 weist eine erste Kammer 15 auf, innerhalb dieser das Trägerelement 20 mit der Sicherungseinheit 40 und dem elektronischen Schlüssel 30 linear bewegbar ist. Benachbart zur ersten Kammer 15 ist eine zweite Kammer 16 vorgesehen, innerhalb dieser ein Blockierungssystem 50 verschiebbar angeordnet ist. Das Blockierungssystem 50 stellt hierbei einen Hubmagneten dar, der rein schematisch in Figur 3 gezeigt ist. In der Ausgangsstellung des Trägerelementes 20 ragt der Kopfbereich 25 der Arretierungsmittel 23 durch jeweils eine Durchtrittsöffnung 17 zumindest bereichsweise in die zweite Kammer 16 hinein. In der Betriebsstellung nehmen die Arretierungsmittel 23 eine derartige Position ein, dass das Arretierungsmittel 23 sowie der Kopfbereich 25 vollständig außerhalb der zweiten Kammer 16 angeordnet ist. Über ein Sensorsystem 60, 61 wird die Position des Trägerelementes 20 detektiert, das bedeutet dass das Sensorsystem 60, 61 erkennt, wann sich das Trägerelement 20 in der Betriebsstellung befindet. Im vorliegenden Ausführungsbeispiel ist das Sensorsystem 60, 61 mit einem Magneten 61 ausgeführt, der unmittelbar auf dem Trägerelement 20 aufgesetzt ist. Korrespondierend hierzu ist ein Hallsensor 60 fest an der Vorrichtung 10 angeordnet, der gemäß der Figur 2 und 3 lediglich schematisch gezeigt ist. Nachdem nun das Sensorsystem 60, 61 die Betriebsstellung des Trägerelementes 20 detektiert hat, erfolgt eine Kontaktierung des Hubmagneten 50, der innerhalb der zweiten Kammer 16 derart verschoben wird, dass der Kopfbereich 25 des Arretierungsmittels 23 blockiert wird. Das bedeutet, dass der Hubmagnet 50 in die Position zwischen dem Kopfbereich 25 und den Durchtrittsöffnungen 17 innerhalb der zweiten Kammer 16 verfahren wird. Der elektronische Schlüssel 30 kann in der Betriebsstellung somit nicht entfernt werden, da zum einen die Rastmittel 22 in den Schlüssel 30 zuverlässig eingreifen. Zum anderen kann auch das Trägerelement 20 nicht in seine Ausgangsstellung verfahren werden, da der Hubmagnet 50 eine Bewegung der Arretierungsmittel 23 verhindert.

Der Hubmagnet 50 kann beispielsweise aus seiner, die Arretierungsmittel 23 blockierenden Stellung verfahren, falls der Benutzer das Kraftfahrzeug über einen nicht explizit dargestellten Start-/Stopp-Schalter ausgeschaltet hat. Der Benutzer muss nun eine gewisse Zugkraft auf den elektronischen Schlüssel 30 ausüben, damit die Rastelemente 42 aus der Betriebsstellung entlang der Kulissenführung 13 bis zum Druckpunkt 48 verfahren werden. Ab dem Druckpunkt 48 sorgt die Feder 47 dafür, dass die Rastelemente 42 jeweils in Richtung des Gehäuses 11 gedrückt werden und somit in die Ausgangsstellung, am Anschlag 12 kontaktierend, verfahren. In der Ausgangsstellung sind die Rastmittel 22 nicht mehr im Eingriff mit den Öffnungen 31 des Schlüssels 30, so dass der Schlüssel 30 aus der Vorrichtung 10 entnommen werden kann.

### Bezugszeichenliste

- 10: Vorrichtung
- 11: Gehäusewand
- 12: Anschlag
- 13: Kulissenführung
- 14: Öffnung
- 15: erste Kammer
- 16: zweite Kammer
- 17: Durchtrittsöffnung
- 20: Trägerelement
- 21: Aufnahme
- 22: Rastmittel
- 23: Arretierungsmittel
- 24: Auswölbung
- 25: Kopfbereich des Arretierungsmittels 23
- 30: Schlüssel
- 31: Öffnung
- 40: Sicherungseinheit
- 41: Aktivierungsfläche
- 42: Rastelement
- 43: Oberteil
- 44: Unterteil
- 45: Führungsmittel, Schlitz
- 46: Gegenführungsmittel
- 47: Federelement
- 48: Druckpunkt
- 50: Blockierungssystem
- 60: Sensorsystem, Hallsensor
- 61: Sensorsystem, Magnet

## Patentansprüche

1. Vorrichtung (10) zur Aufnahme eines elektronischen Schlüssels (30), der mit einem Zündschlosssystem eines Kraftfahrzeuges zur Fahrberechtigungskontrolle zusammenwirkt, mit
einem Gehäuse (11), in dem eine in einem Trägerelement (20) befindliche Aufnahme (21) angeordnet ist, in die der elektronische Schlüssel (30) einführbar ist, wobei das Trägerelement (20) mittels des Schlüssels (30) zwischen einer Ausgangsstellung und mindestens einer Betriebsstellung bewegbar ist,
**dadurch gekennzeichnet,**
**dass** in der Ausgangsstellung das Trägerelement (20) über eine Sicherungseinheit (40) von einer Sicherungsposition in eine Entsicherungsposition bringbar ist,
in der Sicherungsposition das Trägerelement (20) in der Ausgangsstellung gehalten ist,
in der Entsicherungsposition eine Bewegung des Trägerelementes (20) in die Betriebsstellung freigegeben ist und
das Gehäuse (11) eine Kulissenführung (13) aufweist, die mit Rastelementen (42) der Sicherungseinheit (40) zusammenwirkt, wobei während der Bewegung des Trägerelementes (20) von der Ausgangsstellung in die Betriebsstellung die Sicherungseinheit (40) mit der Kulissenführung (13) eine Widerstandskraft auf das Trägerelement (20) ausübt.

2. Vorrichtung (10) nach Anspruch 1,
**dadurch gekennzeichnet,**
**dass** das Gehäuse (11) eine Anschlag (12) aufweist, an dem das Rastelement (42) in der Sicherungsposition des Trägerelementes (20) anliegt, wobei insbesondere die Kulissenführung (13) sich dem Anschlag (12) in Richtung der Betriebsstellung des Trägerelementes (20) anschließt und in das Innere der Vorrichtung (10) hineinragt.

3. Vorrichtung (10) nach einem der vorhergehenden Ansprüche,
**dadurch gekennzeichnet,**
**dass** die Kulissenführung (13) einen Druckpunkt (48) aufweist, bei dem die Rastelemente (42) maximal in das Innere der Vorrichtung (10) eingefahren sind.

4. Vorrichtung (10) nach einem der vorhergehenden Ansprüche,
**dadurch gekennzeichnet,**
**dass** die Sicherungseinheit (40) innerhalb der Aufnahme (21) mit Aktivierungsflächen (41) ausgeführt ist, die der Kontur des Schlüssels (30) derart angepasst sind, dass lediglich über eine Kontaktierung der Aktivierungsflächen (41) durch den Schlüssel (30) eine Entsicherungsposition des Trägerelementes (20) erzielbar ist.

5. Vorrichtung (10) nach Anspruch 4,
**dadurch gekennzeichnet,**
**dass** die Aktivierungsflächen (41) linear bewegbar gelagert sind.

6. Vorrichtung (10) nach Anspruch 4 oder 5,
**dadurch gekennzeichnet,**
**dass** mindestens zwei Aktivierungsflächen (41) vorgesehen sind, die beabstandet voneinander angeordnet sind, wobei eine Entsicherungsposition nur durch eine Bewegung beider Aktivierungsflächen (41) erreichbar ist.

7. Vorrichtung (10) nach einem der vorhergehenden Ansprüche,
**dadurch gekennzeichnet,**
**dass** das Trägerelement (20) senkrecht zur Verschieberichtung der Aktivierungsflächen (41) bewegbar gelagert ist.

8. Vorrichtung (10) nach einem der vorhergehenden Ansprüche,
**dadurch gekennzeichnet,**
**dass** die Sicherungseinheit (40) ein Oberteil (43) und ein Unterteil (44) aufweist, wobei das Oberteil (43) und das Unterteil (44) jeweils mit einem Rastelement (42) und einer Aktivierungsfläche (41) ausgeführt sind.

9. Vorrichtung (10) nach einem der vorhergehenden Ansprüche,
**dadurch gekennzeichnet,**
**dass** das Oberteil (43) ein Führungsmittel (45) aufweist, das mit einem Gegenführungsmittel (46) des Unterteils (44) zusammenwirkt.

10. Vorrichtung (10) nach einem der vorhergehenden Ansprüche,
**dadurch gekennzeichnet,**
**dass** das Oberteil (43) und das Unterteil (44) federbelastet sind, wobei insbesondere ein Federelement (47) zwischen dem Oberteil (43) und dem Unterteil (44) angeordnet ist und eine Kraft auf beide Teile (43,44) ausübt, wobei die Kraft zum Gehäuse (11) senkrecht zur Verschieberichtung des Trägerelementes (20) ausgerichtet ist, wobei insbesondere im Druckpunkt (48) der Rastelemente (42) das Federelement (47) maximal gespannt ist und das Trägerelement (20) ab dem Druckpunkt (48) allein über das Federelement (47) in Richtung der Betriebsstellung bewegt wird.

11. Vorrichtung (10) nach einem der vorhergehenden Ansprüche,
**dadurch gekennzeichnet,**
**dass** das Führungsmittel (45) eine schlitzförmige Öffnung ist, in der das Gegenführungsmittel (46) verschiebbar gelagert ist.

12. Vorrichtung (10) nach einem der vorhergehenden Ansprüche,
**dadurch gekennzeichnet,**
**dass** eine Öffnung (14) vorgesehen ist, durch die der Schlüssel (30) in die Aufnahme (21) einbringbar ist, wobei das Trägerelement (20) Rastmittel (22) aufweist, die in der Betriebsstellung in den Schlüssel (30) eingreifen, wodurch der Schlüssel (30) in der Aufnahme (21) gehalten ist, wobei insbesondere in der Ausgangsstellung des Trägerelementes (20) die Rastmittel (22) in Richtung des Gehäuses (11) elastisch verformbar sind, wobei das Trägerelement (20) eine Auswölbung (24) aufweist, die dem Rastmittel (22) zugeordnet ist, wobei die Auswölbung (24) in der Ausgangsstellung des Trägerelementes (20) beabstandet zur Gehäusewand ist und in der Betriebsstellung unmittelbar an dem Gehäuse (11) anliegt, wodurch die Rastmittel (22) in den Schlüssel (30) eingreifen und der Schlüssel (30) zuverlässig in der Aufnahme (21) gehalten ist.

13. Vorrichtung (10) nach einem der vorhergehenden Ansprüche,
**dadurch gekennzeichnet,**
**dass** das Trägerelement (20) an der der Öffnung (14) abgewandten Seite Arretierungsmittel (23) aufweist, die in der Betriebsstellung des Trägerelementes (20) in einen Bereich der Vorrichtung (10) eingreifen, wodurch das Trägerelement (20) arretierend gehalten ist, wobei insbesondere eine erste Kammer (15) vorgesehen ist, in der das Trägerelement (20) linear bewegbar gelagert ist, die an der der Öffnung (14) abgewandten Seite mindestens eine Durchtrittsöffnung (17) aufweist, durch die das Arretierungsmittel (23) in der Betriebsstellung des Trägerelementes (20) sich erstreckt.

14. Vorrichtung (10) nach einem der vorhergehenden Ansprüche,
**dadurch gekennzeichnet,**
**dass** eine zweite Kammer (16) vorgesehen ist, in der ein Blockierungssystem (50) angeordnet ist, das das Trägerelement (20) in seiner Betriebsstellung arretiert, so dass eine Bewegung des Trägerelementes (20) in die Ausgangsstellung blockiert ist.

15. Vorrichtung (10) nach Anspruch 14,
**dadurch gekennzeichnet,**
**dass** das Blockierungssystem (50) ein Hubmagnet ist.

16. Vorrichtung (10) nach Anspruch 14 oder 15,
**dadurch gekennzeichnet,**
**dass** das Blockierungssystem (50) innerhalb der zweiten Kammer (16) verschiebbar gelagert ist, wobei in der Betriebsstellung des Trägerelementes (20) das Blockierungssystem (50) zwischen den Arretierungsmitteln (23) und den Durchtrittsöffnungen (17) bewegbar ist.

17. Vorrichtung (10) nach einem der vorhergehenden Ansprüche,
**dadurch gekennzeichnet,**
**dass** ein Sensorsystem (60,61) vorgesehen ist, das die Position des Trägerelementes (20) detektiert und in Datenkommunikation mit weiteren elektronischen Bauteilen, insbesondere mit dem Blockierungssystem (50) steht.

## Claims

1. Device (10) for accepting an electronic key (30), cooperating with an ignition switch system of a vehicle to control the driver authorization, with
a housing (11) in which an acceptance (21) arranged within the bearing element (20) is assembled, in which the electronic key (30) can be inserted, whereas the bearing element (20) is moveable between a basic position and at least one operating position via a key (30),
**characterized in that,**
in the basic position the bearing element (20) can achieve a releasing position based on a retaining position using a supporting device (40),
in the retaining position the bearing element (20) is kept in the basic position,
in the releasing position a movement of the bearing element (20) in the operating position is unclamped and
the housing (11) comprises a guide rail (13) interacting with resting means (42) of the supporting device (40), wherein during the movement of the bearing element (20) from the basic position into the operating position the supporting device (40) excerpts a resisting power towards the bearing element (40) via the guide rail (13).

2. Device (10) according to claim 1,
**characterized in that,**
the housing (11), comprises a dead stop (12) against which the resting means (42) rests in the retaining position of the bearing element (20), wherein particularly the guide rail (13) is attached to the dead stop (12) in the direction of the operating position of the bearing element (20) and is protruding into the inside of the device (10).

3. Device (10) according to one of the preceding claims,
**characterized in that,**
the guide rail (13) comprises a pressure point (48) at which the resting means (42) are drawn in at most into the inside of the device (10).

4. Device (10) according to one of the preceding claims,
**characterized in that,**
the supporting device (40) comprises activation areas (41) within the acceptance (21), adapted to the outline of the key (30) in a way that a releasing position of the bearing element (20) is only achievable via a contact of the activation area (41) via the key (30).

5. Device (10) according to claim 4,
**characterized in that,**
the activation areas (41) are moveably embedded in a linear way.

6. Device (10) according to claims 4 or 5,
**characterized in that,**
at least two activation areas (41) are intended, being assembled in a spaced relationship, wherein the releasing position is only achievable via a movement of both activation areas (41).

7. Device (10) according to one of the preceding claims,
**characterized in that,**
the bearing element (20) is moveably embedded perpendicular to the sliding direction of the activation areas (41).

8. Device (10) according to one of the preceding claims,
**characterized in that,**
the supporting device (40) comprises an upper component (43) and a lower component (44), wherein the upper component (43) and the lower component (44) each comprises a resting means (42) and an activation area (41).

9. Device (10) according to one of the preceding claims,
**characterized in that,**
the upper component (43) comprises a guiding means (45) which is interacting with the counter guiding means (46) of the lower part (44).

10. Device (10) according to one of the preceding claims,
**characterized in that,**
the upper component (43) and the lower component (44) are spring loaded, wherein particularly a spring element (47) is assembled between the upper component (43) and the lower component (44) exerting a force towards both parts (43, 44), wherein the force is aligned towards the housing (11) perpendicular to the sliding direction of the bearing element (20), wherein particularly within the pressure point (48) of the resting means (42) the spring element (47) is stressed to a maximum and the bearing element (20) is moved from the pressure point (48) solely via the spring element (47) in the direction of the operating position.

11. Device (10) according to one of the preceding claims,
**characterized in that,**
that guiding means (45) is a slot like opening in which the counter guiding means (46) is slideably embedded.

12. Device (10) according to one of the preceding claims,
**characterized in that,**
an opening (14) is provided, through which the key (30) can be brought into an acceptance (21), wherein the bearing element (20) comprises resting means (22), which are engaging with the key (30) in the operating position, wherein the key (30) is kept within the acceptance (21), wherein particularly in the basic position of the bearing element (20) the resting means (22) are resiliently deformable in the direction of the housing (11) wherein the bearing element (20) comprises a protrusion (24) which is assigned to the resting means (22), wherein the protrusion (24) is spaced towards the surface of the housing (11) in the basic position of the bearing element (20) and is directly resting against the housing (11) in the operating position, whereas the resting means (22) are engaging with the key (30) and the key (30) is kept reliably within the acceptance (21).

13. Device (10) according to one of the preceding claims,
**characterized in that,**
the bearing element (20) comprises resting means (23) at the opening (14) detached side, which are in the operating position of the bearing element (20) engaging in an area of the device (10) whereas the bearing element (20) is kept resting, wherein particularly a first chamber (15) is provided in which the bearing element (20) is moveably embedded in a linear way which comprises at least one passage opening (17) at the opening (14) detached side through which the resting means (23) is extending in the operating position of the bearing element (20).

14. Device (10) according to one of the preceding claims,
**characterized in that,**
a second chamber (16) is provided in which a blocking system (50) is assembled which is arresting the bearing element (20) in its operating position in a way that the movement of the bearing element (20) in the basic position is blocked.

15. Device (10) according to claim 14,
**characterized in that,**
the blocking system (50) is a stroke magnet.

16. Device (10) according to claim 14 or 15,
**characterized in that,**
the blocking system (50) is slideably embedded within the second chamber (16) wherein a blocking system (50) is moveable between the arresting means (23) and the passage opening (17) in the operating position of the bearing element (20).

17. Device (10) according to one of the preceding claims,
**characterized in that,**
a sensor system (60, 61) is provided detecting the position of the bearing element (20) and comprising a data communication with further electronic components, particularly with the blocking system (50).

## Revendications

1. Dispositif (10) de réception d'une clé électronique (30) qui coopère avec un système de serrure de contact d'un véhicule automobile pour le contrôle de l'autorisation de démarrage, comprenant
un boîtier (11) dans lequel est disposé un logement (21) qui est situé dans un élément porteur (20) et dans lequel la clé électronique (30) peut être introduite, l'élément porteur (20) étant déplaçable au moyen de la clé (30) entre une position de départ et au moins une position de service,
**caractérisé en ce**
**que** dans la position de départ, l'élément porteur (20) peut être amené par une unité de verrouillage (40) d'une position de verrouillage dans une position de déverrouillage,
dans la position de verrouillage, l'élément porteur (20) est maintenu dans la position de départ,
dans la position de déverrouillage, un déplacement de l'élément porteur (20) dans la position de service est autorisé et
le boîtier (11) présente une coulisse de guidage (13) qui coopère avec des éléments d'enclenchement (42) de l'unité de verrouillage (40), l'unité de verrouillage (40) exerçant avec la coulisse de guidage (13) une force de résistance sur l'élément porteur (20) pendant le déplacement de l'élément porteur (20) de la position de départ dans la position de service.

2. Dispositif (10) selon la revendication 1,
**caractérisé en ce**
**que** le boîtier (11) présente une butée (12) contre laquelle l'élément d'enclenchement (42) vient s'appuyer dans la position de verrouillage de l'élément porteur (20), la coulisse de guidage (13) étant en particulier contiguë à la butée (12) dans la direction de la position de service de l'élément porteur (20) et faisant saillie à l'intérieur du dispositif (10).

3. Dispositif (10) selon une des revendications précédentes,
**caractérisé en ce**
**que** la coulisse de guidage (13) présente un point de poussée (48) au niveau duquel les éléments d'enclenchement (42) sont rentrés au maximum à l'intérieur du dispositif (10).

4. Dispositif (10) selon une des revendications précédentes,
**caractérisé en ce**
**que** l'unité de verrouillage (40) est réalisée à l'intérieur du logement (21) avec des surfaces d'activation (41) qui sont adaptées au contour de la clé (30) de telle manière que seule une mise en contact des surfaces d'activation (41) par la clé (30) permette d'atteindre une position de déverrouillage de l'élément porteur (20).

5. Dispositif (10) selon la revendication 4,
**caractérisé en ce**
**que** les surfaces d'activation (41) sont montées mobiles linéairement.

6. Dispositif (10) selon la revendication 4 ou 5,
**caractérisé en ce**
**qu'**au moins deux surfaces d'activation (41) sont prévues, qui sont disposées à distance l'une de l'autre, une position de déverrouillage ne pouvant être atteinte que par un déplacement des deux surfaces d'activation (41).

7. Dispositif (10) selon une des revendications précédentes,
**caractérisé en ce**
**que** l'élément porteur (20) est monté mobile perpendiculairement à la direction de déplacement des surfaces d'activation (41).

8. Dispositif (10) selon une des revendications précédentes,
**caractérisé en ce**
**que** l'unité de verrouillage (40) présente une partie supérieure (43) et une partie inférieure (44), la partie supérieure (43) et la partie inférieure (44) étant réalisées chaque fois avec un élément d'enclenchement (42) et une surface d'activation (41).

9. Dispositif (10) selon une des revendications précédentes,
**caractérisé en ce**
**que** la partie supérieure (43) présente un moyen de guidage (45) qui coopère avec un moyen de guidage complémentaire (46) de la partie inférieure (44).

10. Dispositif (10) selon une des revendications précédentes,
**caractérisé en ce**
**que** la partie supérieure (43) et la partie inférieure (44) sont chargées par ressort, un élément formant ressort (47) étant en particulier disposé entre la partie supérieure (43) et la partie inférieure (44) et exerçant une force sur les deux parties (43, 44), la force étant orientée par rapport au boîtier (11) perpendiculairement à la direction de déplacement de l'élément porteur (20), l'élément formant ressort (47) étant en particulier tendu au maximum au point de poussée (48) des éléments d'enclenchement (42) et l'élément porteur (20) étant déplacé en direction de la position de service uniquement par l'élément formant ressort (47) à partir du point de poussée (48).

11. Dispositif (10) selon une des revendications précédentes,
**caractérisé en ce**
**que** le moyen de guidage (45) est une ouverture en forme de fente dans laquelle le moyen de guidage complémentaire (46) est monté coulissant.

12. Dispositif (10) selon une des revendications précédentes,
**caractérisé en ce**
**qu'**il est prévu une ouverture (14) à travers laquelle la clé (30) peut être introduite dans le logement (21), l'élément porteur (20) présentant des moyens d'enclenchement (22) qui s'engagent dans la clé (30) dans la position de service, de sorte que la clé (30) soit maintenue dans le logement (21), les moyens d'enclenchement (22) étant en particulier déformables élastiquement en direction du boîtier (11) dans la position de départ de l'élément porteur (20), l'élément porteur (20) présentant un bombement (24) qui est associé au moyen d'enclenchement (22), le bombement (24) étant éloigné de la paroi de boîtier dans la position de départ de l'élément porteur (20) et s'appuyant directement sur le boîtier (11) dans la position de service, de sorte que les moyens d'enclenchement (22) s'engagent dans la clé (30) et que la clé (30) soit maintenue de façon fiable dans le logement (21).

13. Dispositif (10) selon une des revendications précédentes,
**caractérisé en ce**
**que** l'élément porteur (20) présente du côté éloigné de l'ouverture (14) des moyens d'arrêt (23) qui s'engagent dans une zone du dispositif (10) dans la position de service de l'élément porteur (20), de sorte que l'élément porteur (20) soit maintenu avec arrêt, une première chambre (15) étant en particulier prévue, dans laquelle l'élément porteur (20) est monté mobile linéairement, qui présente du côté éloigné de l'ouverture (14) au moins une ouverture de passage (17) à travers laquelle le moyen d'arrêt (23) s'étend dans la position de service de l'élément porteur (20).

14. Dispositif (10) selon une des revendications précédentes,
**caractérisé en ce**
**qu'**une deuxième chambre (16) est prévue, dans laquelle est disposé un système de blocage (50) qui arrête l'élément porteur (20) dans sa position de service, de façon qu'un déplacement de l'élément porteur (20) dans la position de départ soit bloqué.

15. Dispositif (10) selon la revendication 14,
**caractérisé en ce**
**que** le système de blocage (50) est un aimant de levage.

16. Dispositif (10) selon la revendication 14 ou 15,
**caractérisé en ce**
**que** le système de blocage (50) est monté coulissant à l'intérieur de la deuxième chambre (16), le système de blocage (50) étant déplaçable entre les moyens d'arrêt (23) et les ouvertures de passage (17) dans la position de service de l'élément porteur (20).

17. Dispositif (10) selon une des revendications précédentes,
**caractérisé en ce**
**qu'**il est prévu un système de capteurs (60, 61) qui détecte la position de l'élément porteur (20) et qui est en communication de données avec d'autres composants électroniques, en particulier avec le système de blocage (50).
